# EUROPEAN PATENT SPECIFICATION

(11) **EP 3 793 318 B1**
(45) Date of publication and mention of the grant of the patent: **23.02.2022**
(21) Application number: 18919170.3
(22) Date of filing: 16.05.2018
(51) Int. Cl.: H04W 24/10, H04W 76/16

(54) **MANAGING MOBILITY BETWEEN DIFFERENT TYPES OF NETWORKS**
VERWALTUNG VON MOBILITÄT ZWISCHEN UNTERSCHIEDLICHEN NETZTYPEN
GESTION DE MOBILITÉ ENTRE DES TYPES DIFFÉRENTS DE RÉSEAUX

(43) Date of publication of application: 17.03.2021
(73) Proprietor: GUANGDONG OPPO MOBILE TELECOMMUNICATIONS CORP., LTD., Dongguan Guangdong 523860 (CN)
(72) Inventor: LIU, Jianhua, Dongguan, Guangdong 523860 (CN)
(74) Representative: Rossi, Ugo
(86) International application number: PCT/CN2018/087149
(87) International publication number: WO 2019/218281

(56) References cited:
- WO-A1-2015/136122
- WO-A1-2016/056794
- WO-A1-2016/061986
- WO-A1-2018/085187
- CN-A- 105 517 043
- US-A1- 2016 057 687
- CATT: "TS 23.501: Discussion on single registration without Nx interface", 3GPP DRAFT; S2-173222_TS 23.501 DISCUSSION ON SINGLE REGISTRATION WITHOUT NX INTERFACE, 3RD GENERATION PARTNERSHIP PROJECT (3GPP), MOBILE COMPETENCE CENTRE ; 650, ROUTE DES LUCIOLES ; F-06921 SOPHIA-A , vol. SA WG2, no. Hangzhou, China; 20170515 - 20170519 14 May 2017 (2017-05-14), XP051281724, Retrieved from the Internet: URL:http://www.3gpp.org/ftp/Meetings_3GPP_ SYNC/SA2/Docs/ [retrieved on 2017-05-14]

## Description

### Technical Field

The present invention relates to wireless communication technology, in particular to a method and a network device.

### Background

With the rapid development of wireless network communication technology, wireless communication network has gradually entered a 5G era. In the 5G era, the User Equipment (UE) can not only access the 5G core network, namely, the Next Generation Core Network (NGCN), through the Next Generation-Radio Access Network (NG-RAN) but also access a 4G core network, namely, the Evolved Packet Core Network (EPC), through the Evolved Universal Mobile Telecommunications System Territorial Radio Access Network (E-UTRAN). At present, network changes between NGCN and EPC can be realized through N26 network interface between Access and Mobility Management Function (AMF) in NGCN and Mobility Management Entity (MME) in EPC.

However, the network handover between NGCN and EPC based on N26 network interface may result in service interruption, and some service requirements of the terminal, such as emergency call service and the like, may not be met, resulting in a decrease in reliability of network change between NGCN and EPC. The same problem exists in network handover between other different types of core networks.

The documents WO2015/135122 A1 WO2018/085187 A1, 3GPP DRAFT S2-173222 and US2016/057687 A1 have disclosed the related art of the present disclosure. In particular, WO 2018/085187 A1 discloses that, in order to support a seamless handover between EPC and NG Core, an NGx control plane interface may be provided between EPC and NG Core, which may also be referred to as an N26 interface, regarded as a guarantee for the seamless handover.

However, the network handover between NG Core and EPC based on N26 network interface may result in service interruption, i.e. only an N26 interface is insufficient for the seamless handover.

### Summary

Aspects of the present invention provide a method and network device to improve the reliability of network changes between different types of core networks.

The invention is set out in the appended set of claims.

In one aspect of the present invention, a method is provided, as defined in Claim 1.

In another aspect of the present invention, a first network device is provided, as defined in Claim 7.

According to the above technical scheme, a first network device acquires behavior decision information of a terminal, wherein the behavior decision information includes at least one of terminal capability information of the terminal, service requirement information initiated by the terminal, service quality information initiated by the terminal and user subscription information of the terminal, so that the first network device can send first indication information to the terminal according to the behavior decision information, so as to instruct the terminal to execute a specific mobility process, which comprises a dual registration process. Since the first network device instructs the terminal to execute the specific mobility process without only depending on whether a network interface exists between different types of core networks any longer, but in combination with the behavior decision information of the terminal, the terminal can implement network handover without service interruption on the basis of two different types of core networks registered by the terminal in the case where a network interface exists between different types of core networks, thereby improving the reliability of network change between different types of core networks.

### Brief Description of Drawings

In order to describe technical solutions of embodiments of the present invention more clearly, the drawings to be used in the description of the embodiments or the related art will be simply introduced below. Apparently, the drawings described below are some embodiments of the present invention, and one skilled in the art can obtain other drawings according to these drawings without paying an inventive effort.
FIG. 1 is a schematic flow chart of a communication method according to an embodiment of the present invention.
FIG. 2 is a schematic structural diagram of a first network device according to another embodiment of the present invention.

### Detailed Description

In order to make the purpose, technical solutions and advantages of embodiments of the present invention more clear, the technical solutions in the embodiments of the present invention will be described clearly and completely in the following with reference to the drawings in the embodiments of the present invention. Apparently, the described embodiments are parts, but not all, of the embodiments of the present invention. Based on the embodiments of the present invention, all other embodiments obtained by a person of ordinary skill in the art without paying an inventive effort should fall within the protection scope of the present inventor, provided that they fall within the scope of the appended claims.

In addition, the term "and/or" in this specification describes only an association relationship for describing associated objects and represents that three relationships may exist. For example, A and/or B may represent the following three cases: Only A exists, both A and B exist, and only B exists. In addition, the symbol "/" in this document generally indicates that objects of the former and the latter connected by "/" has an "or" relationship.

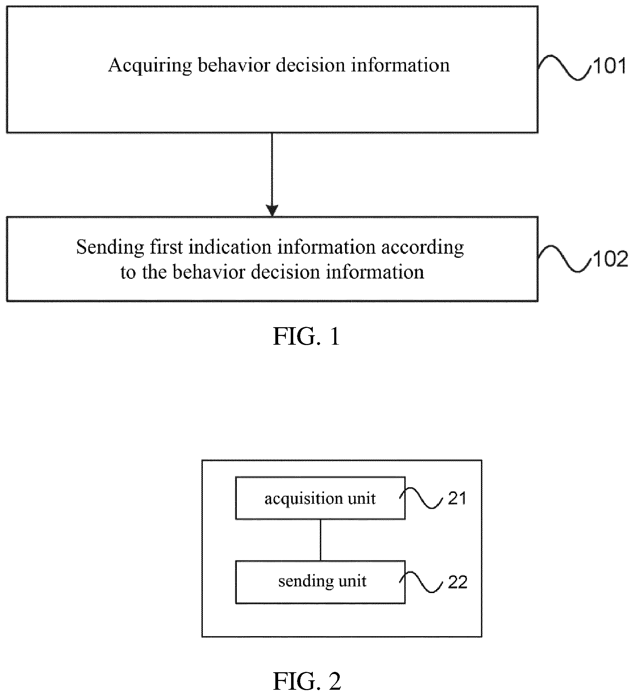

FIG. 1 is a schematic flow chart of a communication method according to an embodiment of the present invention, as shown in FIG. 1.

In 101, a first network device acquires behavior decision information of a terminal, wherein the behavior decision information comprises at least one of terminal capability information of the terminal, service requirement information initiated by the terminal, service quality information initiated by the terminal and user subscription information of the terminal.

In 102, the first network device sends first indication information to the terminal according to the behavior decision information to instruct the terminal to execute a specific mobility process.

The specific mobility process may include, a dual wireless process, a dual registration process, a dual connectivity process, or a mobility process not based on a network interface, but the present invention limited to a dual registration process.

The dual wireless process refers to a process not being part of the invention, in which the terminal executes the dual wireless process and enters the dual wireless mode. Dual wireless mode means that the terminal can connect to two types of wireless access networks simultaneously, namely wireless access network 1 and wireless access network 2, through two radio frequency units, namely radio frequency unit 1 and radio frequency unit 2 respectively. Each wireless access network of the two types of wireless access networks may be connected to one type of core network respectively, or may also be connected to the same core network. For example, the terminal can connect to NG-RAN and E-UTRAN respectively through two radio frequency units.

The dual registration process refers to a process according to the present invention, in which the terminal performs the dual registration process and enters the dual registration mode. Dual registration mode means that the terminal can be simultaneously connected to two types of wireless access networks, i.e. wireless access network 1 and wireless access network 2. Each wireless access network of the two types of wireless access networks is connected to one type of core network respectively. The terminal can be connected to the two types of wireless access networks simultaneously through one radio frequency unit or through two radio frequency units respectively. In accordance with the invention, the terminal accesses a 5G core network, namely NGCN, through NG-RAN, and also accesses a 4G core network, namely EPC, through E-UTRAN.

The dual connectivity process refers to a capability of terminal to enter the dual connectivity mode by performing the dual connectivity process. Dual connectivity mode means that the terminal can simultaneously connect to two types of wireless access networks, namely wireless access network 1 and wireless access network 2, and each wireless access network of the two types of wireless access networks is connected to the same core network. The terminal can be connected to the two types of wireless access networks simultaneously through one radio frequency unit or through two radio frequency units respectively. For example, the terminal may access a 5G core network, namely NGCN, through NG-RAN and E-UTRAN, or may also access a 4G core network, namely EPC, through NG-RAN and E-UTRAN.

It should be noted that the first network device involved in the present invention may be a mobility management device, for example, an Access and Mobility Management Function (AMF) entity and a Session Management Function (SMF) entity in NGCN, or, for example, a Mobility Management Entity (MME) or the like in EPC, or may also be an access network device, for example, an Evolved NodeB (eNB) in E-UTRAN, or for another example, a 5G base station, namely, gNB, or the like in NG-RAN.

The core idea of the present invention is that the first network device determines whether to instruct the terminal to execute a specific mobility process which comprises a dual registration process, by acquiring the behavior decision information of the terminal, instead of instructing the terminal to execute a specific mobility process depending only on whether a network interface exists between different types of core networks, so that the terminal can implement network handover without service interruption on the basis of two different types of core networks registered by the terminal in the case where a network interface exists between different types of core networks, thereby improving the reliability of network change between different types of core networks.

It should be noted that the invention can be applied to network changes between different types of core networks, for example, network changes from 5G core network NGCN to 4G core network EPC, or network changes from 4G core network EPC to 5G core network NGCN, but not to network changes from 5G core network NGCN to 3G core network, which are not part of the invention.

Optionally, in one possible implementation of this embodiment, the terminal capability information may include but is not limited to at least one of the following information:
capability information on whether a specific mobility process is supported; and
capability information on whether a mobility process not based on network interface is supported, for example, N26 network interface between AMF in NGCN and MME in EPC, etc.

Optionally, in one possible implementation of this embodiment, in 101, the first network device can specifically acquire behavior decision information of the terminal in a variety of ways.

In a specific implementation process, the first network device receives the terminal capability information of the terminal sent by the terminal through a registration process initiated by the terminal.

The registration process here refers to a registration process initiated by the terminal in a source system, i.e., at least one of a source access network and a source core network.

Specifically, the first network device may specifically receive terminal capability information of the terminal sent by the terminal through at least one of a registration request message and a location update message.

The registration request message may include, but is not limited to, at least one of the following types of registration request message:
initial registration type;
update registration type; and
emergency service type.

In another specific implementation process, the first network device receives the service requirement information initiated by the terminal sent by the terminal through a service process initiated by the terminal.

Specifically, the first network device can specifically receive the service requirement information initiated by the terminal sent by the terminal through at least one of a service connectivity establishment request message and a service connectivity modification message.

The service requirement information may include but is not limited to at least one of the following information:
adopting a specific mobility process;
adopting a mobility process not based on network interface, such as N26 network interface between AMF in NGCN and MME in EPC; and
delay requirement information of the service during a process of network change.

In another specific implementation process, the first network device acquires at least one of user subscription information of the terminal and service quality information initiated by the terminal, such as delay requirement information in Quality of Service (QoS) information of service connectivity , based on the service process initiated by the terminal.

Optionally, in one possible implementation of this embodiment, in 102, the first indication information sent by the first network device to the terminal may instruct the terminal to execute a specific mobility process which comprises a dual registration process.

Specifically, the first network device may send the first indication information to the terminal through at least one of a registration reply message and a location update reply message.

The registration reply message may include, but is not limited to, at least one of the following types of registration reply messages:
initial registration type;
update registration type; and
emergency service type.

In this implementation, the first indication information may include but is not limited to at least one of the following indications:
indication of a specific mobility process; and
indication of a mobility process not based on network interface, e.g., N26 network interface between AMF in NGCN and MME in EPC, etc.

In this case, after receiving the first indication information, the terminal can use measurement configuration information to execute the specific mobility process.

The specific mobility process here refers to a registration process initiated by the terminal in a target system, i.e., at least one of a target access network and a target core network.

While executing the specific mobility process, the terminal can establish a service connectivity for all services of the terminal in the target system, or can also establish a service connectivity for part of services of the terminal in the target system, or can also establish a service connectivity for services, which meet specific delay requirement information, of the terminal in the target system, which is not particularly limited in this embodiment.

The measurement configuration information adopted by the terminal may include but is not limited to the following information:
a link quality of a target access network is greater than or equal to a first threshold; or
the link quality of the target access network is greater than or equal to the first threshold, and a link quality of a source access network is less than a second threshold.

In a specific implementation process, the terminal can specifically obtain measurement configuration information according to preset configuration data.

In another specific implementation process, the first network device may further send second indication information to the second network device to instruct the terminal to perform a specific mobility process.

Further, after the first network device sends second indication information to the second network device to instruct the terminal to perform the specific mobility process, the second network device may further send measurement configuration information to the terminal for the terminal to perform a specific mobility process.

For example, the second network device may be an Evolved NodeB (eNB) in E-UTRAN.

Or, for another example, the second network device may be a 5G base station, namely gNB, etc., in NG-RAN.

In this embodiment, a first network device acquires behavior decision information of a terminal, wherein the behavior decision information comprises at least one of terminal capability information of the terminal, service requirement information initiated by the terminal, service quality information initiated by the terminal and user subscription information of the terminal, so that the first network device can send first indication information to the terminal according to the behavior decision information, so as to instruct the terminal to execute a specific mobility process. Since the first network device instructs the terminal to execute the specific mobility process without only depending on whether a network interface exists between different types of core networks any longer, but in combination with the behavior decision information of the terminal, the terminal can implement network handover without service interruption on the basis of two different types of core networks registered by the terminal in the case where a network interface exists between different types of core networks, thereby improving the reliability of network change between different types of core networks. It should be noted that for sake of conciseness, the aforementioned method embodiments may be expressed as a series of act combinations, but one skilled person in the art should know that the present invention is not limited by the described sequence of acts, but by the appended claims Secondly, one skilled person in the art should also know that the embodiments described in the specification are all preferred embodiments, and the acts and modules involved are not always necessary for the present invention, which is defined by the appended claims.

In the above-mentioned embodiments, the description of each embodiment has its own emphasis, a part which is not described in detail in an embodiment can be referred to related descriptions in other embodiments.

FIG. 2 is a schematic structural diagram of a first network device according to another embodiment of the present invention, as shown in FIG. 4. The first network device of this embodiment may include an acquisition unit 21 and a sending unit 22. The acquisition unit 21 is configured to acquire behavior decision information of a terminal, wherein the behavior decision information comprises at least one of terminal capability information of the terminal, service requirement information initiated by the terminal, service quality information initiated by the terminal, and user subscription information of the terminal; the sending unit 22 is configured to send first indication information to the terminal according to the behavior decision information to instruct the terminal to execute a specific mobility process.

The specific mobility process may include a dual wireless process, a dual registration process, a dual connectivity process, or a mobility process not based on a network interface, but the invention limited to a dual registration process.

The dual wireless process refers to a process not being part of the invention, in which the terminal executes the dual wireless process and enters the dual wireless mode. Dual wireless mode means that the terminal can connect to two types of wireless access networks simultaneously, namely wireless access network 1 and wireless access network 2, through two radio frequency units, namely radio frequency unit 1 and radio frequency unit 2 respectively. However, each wireless access network of the two types of wireless access networks may be connected to one type of core network respectively, or may also be connected to the same core network, which is not particularly limited in this embodiment. For example, the terminal can connect to NG-RAN and E-UTRAN respectively through two radio frequency units.

The dual registration process refers to a process according to the invention, in which the terminal performs the dual registration process and enters the dual registration mode. Dual registration mode means that the terminal can be simultaneously connected to two types of wireless access networks, i.e. wireless access network 1 and wireless access network 2, and each wireless access network of the two types of wireless access networks is connected to one type of core network respectively. The terminal can be connected to the two types of wireless access networks simultaneously through one radio frequency unit or through two radio frequency units respectively. In accordance with the invention, the terminal accesses a 5G core network, namely NGCN, through NG-RAN, and also accesses a 4G core network, namely EPC, through E-UTRAN.

The dual connectivity process refers to a capability of terminal to enter the dual connectivity mode by performing the dual connectivity process. Dual connectivity mode means that the terminal can simultaneously connect to two types of wireless access networks, namely wireless access network 1 and wireless access network 2, and each wireless access network of the two types of wireless access networks is connected to the same core network. The terminal can be connected to the two types of wireless access networks simultaneously through one radio frequency unit or through two radio frequency units respectively. For example, the terminal may access a 5G core network, namely NGCN, through NG-RAN and E-UTRAN, or may also access a 4G core network, namely EPC, through NG-RAN and E-UTRAN.

It should be noted that the first network device involved in the present invention may be a mobility management device, for example, an Access and Mobility Management Function (AMF) entity and a Session Management Function (SMF) entity in NGCN, or, for example, a Mobility Management Entity (MME) or the like in EPC, or may also be an access network device, for example, an Evolved NodeB (eNB) in E-UTRAN, or for another example, a 5G base station, namely, gNB, or the like in NG-RAN.

The core idea of the present invention is that the first network device determines whether to instruct the terminal to execute a specific mobility process which comprises a dual registration process by acquiring the behavior decision information of the terminal, instead of instructing the terminal to execute a specific mobility process depending only on whether a network interface exists between different types of core networks, so that the terminal can implement network handover without service interruption on the basis of two different types of core networks registered by the terminal in the case where a network interface exists between different types of core networks, thereby improving the reliability of network change between different types of core networks.

It should be noted that the invention can be applied to network changes between different types of core networks, for example, network changes from 5G core network NGCN to 4G core network EPC, or network changes from 4G core network EPC to 5G core network NGCN, but not to network changes from 5G core network NGCN to 3G core network, which are not part of the invention.

Optionally, in one possible implementation of this embodiment, the terminal capability information may include but is not limited to at least one of the following information:
capability information on whether a specific mobility process is supported; and
capability information on whether a mobility process not based on network interface is supported, for example, N26 network interface between AMF in NGCN and MME in EPC, etc.

Optionally, in one possible implementation of this embodiment, the acquisition unit 21 can be specifically configured to:
receive terminal capability information of the terminal sent by the terminal through a registration process initiated by the terminal, and/or
receive service requirement information initiated by the terminal sent by the terminal through a service process initiated by the terminal; and/or
acquire at least one of service quality information initiated by the terminal and user subscription information of the terminal based on the service process initiated by the terminal.

Optionally, in one possible implementation of this embodiment, the first indication information sent by the sending unit 22 to the terminal may include but is not limited to at least one of the following indications:
indication of a specific mobility process; and
indication of a mobility process not based on network interface.

Optionally, in one possible implementation of this embodiment, the sending unit 22 may be further configured to send second indication information to a second network device, and the terminal performs a specific mobility process.

The measurement configuration information adopted by the terminal may include but is not limited to the following information:
the link quality of the target access network is greater than or equal to a first threshold; or
the link quality of the target access network is greater than or equal to the first threshold, and the link quality of the source access network is less than a second threshold.

It should be noted that the functions of the first network device in the embodiment corresponding to FIG. 1 can be implemented by the first network device provided in this embodiment. Relevant contents in the corresponding embodiment of FIG. 1 may be referred to for detailed descriptions, which are not repeated here.

In this embodiment, the acquisition unit acquires behavior decision information of a terminal, wherein the behavior decision information comprises at least one of terminal capability information of the terminal, service requirement information initiated by the terminal, service quality information initiated by the terminal, and user subscription information of the terminal, so that the sending unit can send first indication information to the terminal according to the behavior decision information to instruct the terminal to execute a specific mobility process. Since the first network device instructs the terminal to execute the specific mobility process without only depending on whether a network interface exists between different types of core networks any longer, but in combination with the behavior decision information of the terminal, the terminal can implement network handover without service interruption on the basis of two different types of core networks registered by the terminal in the case where a network interface exists between different types of core networks, thereby improving the reliability of network change between different types of core networks.

Those skilled in the art can clearly understand that, for convenience and conciseness of the description, the specific working processes of the system, apparatus and unit described above may refer to the corresponding processes in the above method embodiments, which are not described herein again.

In several embodiments provided by the present invention, it should be understood that the disclosed systems, apparatuses and methods may be implemented in other ways within the scope of the appended claims. For example, the apparatus embodiments described above are only illustrative, for example, the division of the units is only a logical function division, and there may be other division manners in actual implementation, for example, multiple units or components may be combined or integrated into another system, or some features may be ignored or not executed. On the other hand, the mutual coupling or direct coupling or communication connection shown or discussed may be indirect coupling or communication connection through some interfaces, apparatuses or units, and may be in electrical, mechanical or other forms.

The unit described as a separate component may or may not be physically separated, and the component shown as a unit may or may not be a physical unit, i.e., it may be located in one place or may be distributed over multiple network units. Some or all of the units may be selected according to actual needs to achieve the purpose of the embodiments.

In addition, various functional units in various embodiments of the present invention may be integrated in one processing unit, or the various units may be physically present separately, or two or more units may be integrated in one unit. The integrated units can be implemented in the form of hardware or in the form of hardware plus software functional units.

Finally, it should be noted that the above embodiments are only used to illustrate the technical solutions of the present invention, but not to limit the present invention. Although the present invention has been described in detail with reference to the foregoing embodiments, it should be understood by those skilled in the art that the technical solutions described in the foregoing embodiments may be modified or some of technical features thereof may be equally substituted, as long as these modifications or substitutions do not depart from the scope of the present invention, which is defined by the appended claims.

## Claims

1. A method for managing mobility between different types of core networks, applied to a condition that an N26 network interface exists between a Next Generation Core Network, NGCN and an Evolved Packet Core Network, EPC, **characterized by** comprising:
acquiring (101), by a first network device, behavior decision information of a terminal, wherein the behavior decision information comprises at least one of terminal capability information of the terminal, service requirement information initiated by the terminal, service quality information initiated by the terminal and user subscription information of the terminal;
sending (102), by the first network device, first indication information to the terminal according to the behavior decision information to instruct the terminal to execute a specific mobility process, wherein the specific mobility process comprises a dual registration process.

2. The method according to claim 1, wherein the terminal capability information comprises at least one of following information:
capability information on whether a specific mobility process is supported; and
capability information on whether a mobility process not based on a network interface is supported.

3. The method according to claim 1, wherein acquiring (101), by the first network device, the behavior decision information of the terminal comprises:
receiving, by the first network device, the terminal capability information of the terminal sent by the terminal through a registration process initiated by the terminal; and/or
receiving, by the first network device, the service requirement information initiated by the terminal sent by the terminal through a service process initiated by the terminal; and/or
acquiring, by the first network device, at least one of the service quality information initiated by the terminal and user subscription information of the terminal based on a service process initiated by the terminal.

4. The method according to claim 1, wherein the first indication information comprises at least one of following indications:
indication of a specific mobility process; and
indication of a mobility process not based on a network interface.

5. The method according to any one of claims 1-4, wherein after the first network device acquires the behavior decision information of the terminal, the method further comprises:
sending, by the first network device, second indication information to a second network device to instruct the terminal to perform a specific mobility process.

6. The method according to claim 5, wherein after the first network device sends the second indication information to the second network device to instruct the terminal to execute the specific mobility process, the method further comprises:
sending, by the second network device, measurement configuration information to the terminal for the terminal to perform a specific mobility process.

7. A first network device for managing mobility between different types of core networks, applied to a condition that an N26 network interface exists between a Next Generation Core Network, NGCN and an Evolved Packet Core Network, EPC, **characterized by** comprising:
an acquisition unit (21) configured to acquire behavior decision information of a terminal, wherein the behavior decision information comprises at least one of terminal capability information of the terminal, service requirement information initiated by the terminal, service quality information initiated by the terminal, and user subscription information of the terminal;
a sending unit (22) configured to send first indication information to the terminal according to the behavior decision information to instruct the terminal to execute a specific mobility process, wherein the specific mobility process comprises a dual registration process.

8. The first network device according to claim 7, wherein the terminal capability information comprises at least one of following information:
capability information on whether a specific mobility process is supported; and
capability information on whether a mobility process not based on a network interface is supported.

9. The network device according to claim 7, wherein the acquisition unit (21) is specifically configured to:
receive the terminal capability information of the terminal sent by the terminal through a registration process initiated by the terminal, and/or
receive the service requirement information initiated by the terminal sent by the terminal through a service process initiated by the terminal; and/or
acquire at least one of the service quality information initiated by the terminal and the user subscription information of the terminal based on the service process initiated by the terminal.

10. The first network device according to claim 7, wherein the first indication information comprises at least one of following indications:
indication of a specific mobility process; and
indication of a mobility process not based on a network interface.

11. The first network device according to any one of claims 7-10, wherein the sending unit (22) is further configured to send second indication information to a second network device to instruct the terminal to perform a specific mobility process, wherein the second network device is configured to send measurement configuration information to the terminal for the terminal to perform a specific mobility process.

## Patentansprüche

1. Verfahren zum Verwalten von Mobilität zwischen unterschiedlichen Typen von Kernnetzen, angewandt auf eine Bedingung, dass eine N26-Netzschnittstelle zwischen einem Kernnetz der nächsten Generation, NGCN, und einem Kernnetz mit entwickeltem Paket, EPC, existiert, **dadurch gekennzeichnet, dass** es umfasst:
Erfassen (101), durch eine erste Netzwerkvorrichtung, von Verhaltensentscheidungsinformationen eines Endgerätes, wobei die Verhaltensentscheidungsinformationen Endgerätefähigkeitsinformationen des Endgerätes und/oder von dem Endgerät initiierten Dienstanforderungsinformationen und/oder von dem Endgerät initiierten Dienstqualitätsinformationen und/oder Benutzersubskriptionsinformationen des Endgerätes umfassen;
Senden (102), durch die erste Netzwerkvorrichtung, von ersten Angabeinformationen an das Endgerät gemäß den Verhaltensentscheidungsinformationen, um das Endgerät anzuweisen, einen spezifischen Mobilitätsprozess auszuführen, wobei der spezifische Mobilitätsprozess einen doppelten Registrierungsprozess umfasst.

2. Verfahren nach Anspruch 1, wobei die Endgerätefähigkeitsinformationen mindestens eine der folgenden Informationen umfassen:
Fähigkeitsinformationen darüber, ob ein spezifischer Mobilitätsprozess unterstützt wird; und
Fähigkeitsinformationen darüber, ob ein nicht auf einer Netzschnittstelle basierender Mobilitätsprozess unterstützt wird.

3. Verfahren nach Anspruch 1, wobei das Erfassen (101) der Verhaltensentscheidungsinformationen des Endgerätes durch die erste Netzwerkvorrichtung umfasst:
Empfangen, durch die erste Netzwerkvorrichtung, der Endgerätefähigkeitsinformationen des Endgerätes, die von dem Endgerät durch einen von dem Endgerät initiierten Registrierungsprozess gesendet werden; und/oder Empfangen, durch die erste Netzwerkvorrichtung, der vom Endgerät initiierten Dienstanforderungsinformationen, die vom Endgerät durch einen vom Endgerät initiierten Dienstprozess gesendet werden; und/oder
Erfassen, durch die erste Netzwerkvorrichtung, von durch das Endgerät initiierten Informationen über die Dienstgüte und/oder von Benutzersubskriptionsinformationen des Endgerätes basierend auf einem durch das Endgerät initiierten Dienstprozess.

4. Verfahren nach Anspruch 1, wobei die ersten Angabeinformationen mindestens eine der folgenden Angaben umfassen:
Angaben zu einem spezifischen Mobilitätsprozess; und
Angaben zu einem Mobilitätsprozess, der nicht auf einer Netzschnittstelle basiert.

5. Verfahren nach einem der Ansprüche 1-4, wobei nachdem die erste Netzwerkvorrichtung die Verhaltensentscheidungsinformation des Endgerätes erfasst, das Verfahren ferner umfasst:
Senden, durch die erste Netzwerkvorrichtung, von zweiten Angabeinformationen an eine zweite Netzwerkvorrichtung, um das Endgerät anzuweisen, einen spezifischen Mobilitätsprozess durchzuführen.

6. Verfahren nach Anspruch 5, wobei, nachdem die erste Netzwerkvorrichtung die zweiten Angabeinformationen an die zweite Netzwerkvorrichtung sendet, um das Endgerät anzuweisen, den spezifischen Mobilitätsprozess auszuführen, das Verfahren ferner umfasst:
Senden, durch die zweite Netzwerkvorrichtung, von Messkonfigurationsinformationen an das Endgerät, damit das Endgerät einen spezifischen Mobilitätsprozess durchführt.

7. Erste Netzwerkvorrichtung zum Verwalten von Mobilität zwischen unterschiedlichen Typen von Kernnetzen, angewandt auf eine Bedingung, dass eine N26-Netzschnittstelle zwischen einem Kernnetz der nächsten Generation, NGCN, und einem Kernnetz mit entwickeltem Paket, EPC, existiert, **dadurch gekennzeichnet, dass** es umfasst:
eine Erfassungseinheit (21), die dazu ausgelegt ist, Verhaltensentscheidungsinformationen eines Endgerätes zu erfassen, wobei die Verhaltensentscheidungsinformationen Endgerätefähigkeitsinformationen des Endgerätes und/oder von dem Endgerät initiierten Dienstanforderungsinformationen und/oder von dem Endgerät initiierten Dienstqualitätsinformationen und/oder Benutzersubskriptionsinformationen des Endgerätes umfassen;
eine Sendeeinheit (22), die dazu ausgelegt ist, erste Angabeinformationen an das Endgerät gemäß den Verhaltensentscheidungsinformationen zu senden, um das Endgerät anzuweisen, einen spezifischen Mobilitätsprozess auszuführen, wobei der spezifische Mobilitätsprozess einen doppelten Registrierungsprozess umfasst.

8. Erste Netzwerkvorrichtung nach Anspruch 7, wobei die Endgerätefähigkeitsinformationen mindestens eine der folgenden Informationen umfassen:
Fähigkeitsinformationen darüber, ob ein spezifischer Mobilitätsprozess unterstützt wird; und
Fähigkeitsinformationen darüber, ob ein nicht auf einer Netzschnittstelle basierender Mobilitätsprozess unterstützt wird.

9. Netzwerkvorrichtung nach Anspruch 7, wobei die Erfassungseinheit (21) insbesondere dazu ausgelegt ist:
die Endgerätefähigkeitsinformationen des Endgerätes zu empfangen, die von dem Endgerät durch einen vom Endgerät initiierten Registrierungsprozess gesendet werden, und/oder
die durch das Endgerät initiierten Dienstanforderungsinformationen zu empfangen, die vom Endgerät durch einen vom Endgerät initiierten Dienstprozess gesendet werden; und/oder
die durch das Endgerät initiierten Dienstqualitätsinformationen und/oder die Benutzersubskriptionsinformationen des Endgerätes basierend auf dem durch das Endgerät initiierten Dienstprozess zu erfassen.

10. Erste Netzwerkvorrichtung nach Anspruch 7, wobei die ersten Angabeinformationen mindestens eine der folgenden Angaben umfassen:
Angaben zu einem spezifischen Mobilitätsprozess; und
Angaben zu einem Mobilitätsprozess, der nicht auf einer Netzschnittstelle basiert.

11. Erste Netzwerkvorrichtung nach einem der Ansprüche 7-10, wobei die Sendeeinheit (22) ferner dazu ausgelegt ist:
zweite Angabeinformationen an eine zweite Netzwerkvorrichtung zu senden, um das Endgerät anzuweisen, einen spezifischen Mobilitätsprozess durchzuführen, wobei die zweite Netzwerkvorrichtung dazu ausgelegt ist, Messkonfigurationsinformationen an das Endgerät zu senden, damit das Endgerät einen spezifischen Mobilitätsprozess durchführt.

## Revendications

1. Procédé de gestion de la mobilité entre différents types de réseaux centraux, appliqué à condition qu'une interface de réseau N26 existe entre un réseau central de prochaine génération, NGCN, et un réseau central de paquets évolués, EPC, **caractérisé en ce qu'**il comprend de :
acquérir (101), par un premier dispositif de réseau, des informations de décision de comportement d'un terminal, dans lequel les informations de décision de comportement comprennent au moins un type d'informations parmi des informations de capacité de terminal du terminal, des informations d'exigence de service initiées par le terminal, des informations de qualité de service initiées par le terminal, et des informations d'abonnement d'utilisateur du terminal ;
envoyer (102), par le premier dispositif de réseau, de premières informations d'indication au terminal selon les informations de décision de comportement pour donner l'instruction au terminal d'exécuter un processus de mobilité spécifique, dans lequel le processus de mobilité spécifique comprend un processus de double enregistrement.

2. Procédé selon la revendication 1, dans lequel les informations de capacité de terminal comprennent au moins un type d'informations parmi :
des informations de capacité indiquant si un processus de mobilité spécifique est pris en charge ; et
des informations de capacité indiquant si un processus de mobilité non basé sur une interface réseau est pris en charge.

3. Procédé selon la revendication 1, dans lequel l'acquisition (101), par le premier dispositif de réseau, des informations de décision de comportement du terminal comprend de :
recevoir, par le premier dispositif de réseau, les informations de capacité de terminal du terminal envoyées par le terminal par le biais d'un processus d'enregistrement initié par le terminal ; et/ou
recevoir, par le premier dispositif de réseau, les informations d'exigence de service initiées par le terminal envoyées par le terminal par le biais d'un processus de service initié par le terminal ; et/ou
acquérir, par le premier dispositif de réseau, au moins un type d'informations parmi les informations de qualité de service initiées par le terminal et les informations d'abonnement d'utilisateur du terminal sur la base d'un processus de service initié par le terminal.

4. Procédé selon la revendication 1, dans lequel les premières informations d'indication comprennent au moins l'une des indications suivantes :
l'indication d'un processus de mobilité spécifique ; et
l'indication d'un processus de mobilité non basé sur une interface réseau.

5. Procédé selon l'une quelconque des revendications 1 à 4, dans lequel après que le premier dispositif de réseau a acquis les informations de décision de comportement du terminal, le procédé comprend en outre de :
envoyer, par le premier dispositif de réseau, de secondes informations d'indication à un second dispositif de réseau pour donner l'instruction au terminal d'exécuter un processus de mobilité spécifique.

6. Procédé selon la revendication 5, dans lequel, après que le premier dispositif de réseau a envoyé les secondes informations d'indication au second dispositif de réseau pour donner l'instruction au terminal d'exécuter le processus de mobilité spécifique, le procédé comprend en outre de :
envoyer, par le second dispositif de réseau, des informations de configuration de mesure au terminal pour que le terminal exécute un processus de mobilité spécifique.

7. Premier dispositif de réseau pour gérer la mobilité entre différents types de réseaux centraux, appliqué à condition qu'une interface de réseau N26 existe entre un réseau central de prochaine génération, NGCN, et un réseau central de paquets évolués, EPC, **caractérisé en ce qu'**il comprend :
une unité d'acquisition (21) configurée pour acquérir des informations de décision de comportement d'un terminal, dans lequel les informations de décision de comportement comprennent au moins un type d'informations parmi des informations de capacité de terminal du terminal, des informations d'exigence de service initiées par le terminal, des informations de qualité de service initiées par le terminal, et des informations d'abonnement d'utilisateur du terminal ;
une unité d'envoi (22) configurée pour envoyer de premières informations d'indication au terminal selon les informations de décision de comportement pour donner l'instruction au terminal d'exécuter un processus de mobilité spécifique, dans lequel le processus de mobilité spécifique comprend un processus de double enregistrement.

8. Premier dispositif de réseau selon la revendication 7, dans lequel les informations de capacité de terminal comprennent au moins un type d'informations parmi :
des informations de capacité permettant de savoir si un processus de mobilité spécifique est pris en charge ; et
des informations de capacité indiquant si un processus de mobilité non basé sur une interface réseau est pris en charge.

9. Dispositif de réseau selon la revendication 7, dans lequel l'unité d'acquisition (21) est spécifiquement configurée pour :
recevoir les informations de capacité de terminal du terminal envoyées par le terminal par le biais d'un processus d'enregistrement initié par le terminal, et/ou
recevoir les informations d'exigence de service initiées par le terminal envoyées par le terminal par le biais d'un processus de service initié par le terminal ; et/ou
acquérir au moins un type d'informations parmi les informations de qualité de service initiées par le terminal et les informations d'abonnement d'utilisateur du terminal sur la base du processus de service initié par le terminal.

10. Premier dispositif de réseau selon la revendication 7, dans lequel les premières informations d'indication comprennent au moins l'une des indications suivantes :
l'indication d'un processus de mobilité spécifique ; et
l'indication d'un processus de mobilité non basé sur une interface réseau.

11. Premier dispositif de réseau selon l'une quelconque des revendications 7 à 10, dans lequel l'unité d'envoi (22) est en outre configurée pour envoyer de secondes informations d'indication à un second dispositif de réseau pour donner l'instruction au terminal d'exécuter un processus de mobilité spécifique, dans lequel le second dispositif de réseau est configuré pour envoyer des informations de configuration de mesure au terminal pour que le terminal exécute un processus de mobilité spécifique.
